# EUROPEAN PATENT SPECIFICATION

(11) **EP 3 314 149 B1**
(45) Date of publication and mention of the grant of the patent: **11.08.2021**
(21) Application number: 16766356.6
(22) Date of filing: 27.06.2016
(51) Int. Cl.: F16H 59/12

(54) **VEHICLE WITH A GEAR SHIFT DEVICE OF A STEERING WHEEL GROUP**
FAHRZEUG MIT EINER GANGSCHALTVORRICHTUNG EINER LENKRADGRUPPE
VÉHICULE AVEC UN DISPOSITIF DE CHANGEMENT DE VITESSE D'UN ENSEMBLE VOLANT DE DIRECTION

(30) Priority: 29.06.2015 IT UB20151757
(43) Date of publication of application: 02.05.2018
(73) Proprietor: Universita' degli studi di Brescia, 25121 Brescia (IT)
(72) Inventor: GADOLA, Marco, I-25121 Brescia (IT)
(74) Representative: Gamba, Alessandro
(86) International application number: PCT/IB2016/053816
(87) International publication number: WO 2017/001994

(56) References cited:
- WO-A2-2013/186259
- DE-A1-102004 060 979
- DE-A1-102011 111 123
- JP-A- H10 244 856
- JP-A- 2009 248 956

## Description

This invention relates to a vehicle that comprises a gear shift device.

In this description, "gear shift device" indicates the parts on which the driver operates directly; "gearbox group" indicates the components operating directly on the motor group that is part of the kinematics of the power train; finally, "gearbox system" is the system in its entirety comprising both the gear shift device and the gearbox group. In this description, the electronic control unit is considered to be included in the gearbox group; the gear shift device manually operated by the driver is operatively connected to said control unit.

Preferably, the gear shift device of this invention is designed to be mounted on the steering wheel.

Steering wheel gear shift devices are known through which the driver shifts gear without removing his hands from the steering wheel. These steering wheel gear shift devices comprise one or more paddles placed in proximity of the steering wheel, generally behind it, in such a way that the driver can press them with his fingers, typically with his fingertips, so as to shift gear without removing his hands from the steering wheel.

The paddles of the known gear shift devices operate as a switch in such a way as to shift between one gear and another, upwards, i.e., to a higher gear, or downwards, i.e., towards a lower gear, with respect to the one set.

Preferably, said gear shift devices are operatively connected to gearbox groups suitable to operate in automatic and manual mode. Such gearbox groups are generally managed, for example by means of the control unit, in such a way that the gear shift device is also suitable to change from one operating mode to the other, for example by pressing the respective paddle. In other words, it is known how, with the gearbox group in automatic mode, when the driver presses the paddle, it changes to manual mode for a certain predefined time interval.

The problem encountered in vehicles equipped with the known gear shift devices is related to the management of the transition between automatic mode and manual mode of the gearbox group, which is currently managed only by means of a switch, namely the paddle, not allowing the driver to fully exploit it.

In fact, with prior-art gear shift devices, the gearbox group is not allowed to deactivate the automatic mode without changing gear. Or, when using the prior-art, the gearbox group operates in such a way that in certain time intervals, pre-set and/or managed by the control unit, it is found in automatic mode rather than in manual mode and vice versa; in other words, a change of operating mode only occurs through the electronic management of the vehicle, for example returning to automatic mode after having used manual mode.

In still further other words, vehicles equipped with the known gear shift devices having inefficient management of the operating mode of the gearbox group cause higher consumption and often perform a change of gear when not desired or vice versa. Examples of solutions known in the prior art having said problems are disclosed in documents DE102004060979 and JPH10244856, on which the two-part form is based.

The purpose of this invention is to provide a vehicle comprising a gear shift device configured to solve the aforesaid problem.

This purpose is achieved by means of the vehicle of claim 1. The dependent claims describe variants of preferred embodiments having further advantageous aspects.

The object of this invention is described below in detail, with the help of the accompanying figures, in which:

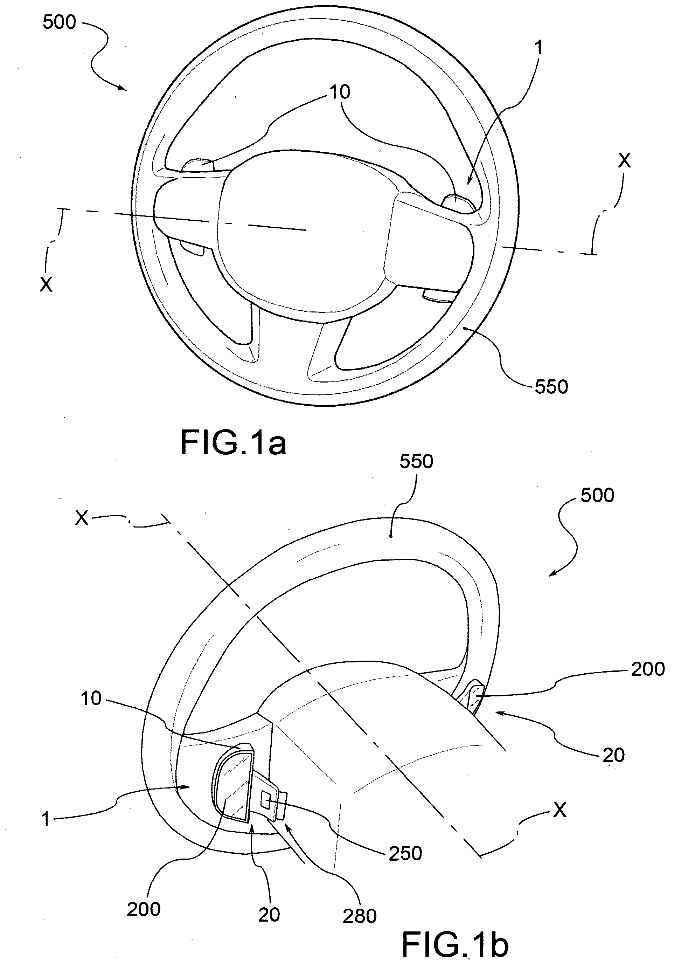

- Figures 1a and 1b are schematic diagrams of a steering wheel group comprising the steering wheel gear shift device of a vehicle according to this invention according to a preferred embodiment, in a front view and a rear view;

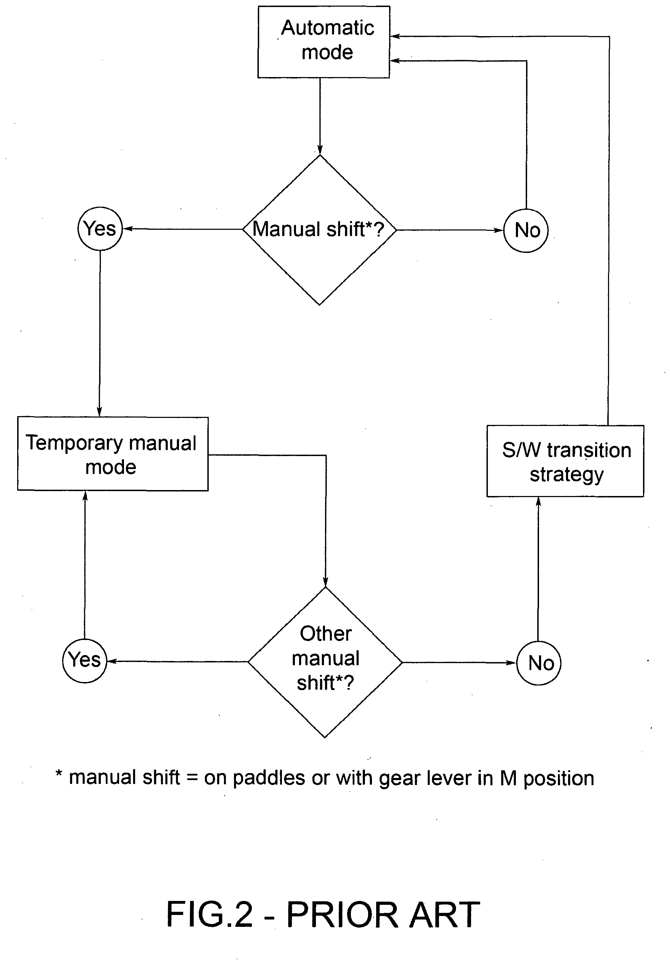

- Figure 2 is a block diagram showing the operating logic between the gear shift device and gearbox group, typical of the prior art;
- Figure 3 is a block diagram showing the operating logic between the gear shift device and gearbox group, typical of the prior art;
- Figure 4 is a block diagram showing a further operating logic between the gear shift device and gearbox group, according to a preferred embodiment of the gear shift device of a vehicle according to this invention;
- Figure 5 is a block diagram showing a further operating logic between the gear shift device and gearbox group, according to a preferred embodiment of the gear shift device of a vehicle according to this invention.

With reference to the above-mentioned figures, reference number 1 identifies, in its entirety, a gear shift device of a vehicle according to this invention.

According to the invention, the gear shift device 1 is designed to be part of a steering wheel group 500; the steering wheel group 500 includes a steering wheel 550 having a main rotation axis X-X.

The gear shift device 1 is operatively connected to a gearbox group configurable in an automatic shift mode and a manual shift mode. The operating mode of the gearbox group is managed by means of a control unit. This is to say that the control unit is suitable to switch between a plurality of operating modes of the gearbox group.

The gear shift device 1 comprises a paddle 10, pushable by the driver from an inactive position to an active position and configured to control a gear shift action of the gearbox group.

In other words, the paddle 10 is configured to operate as a switch so as to control a gear shift action, upwards or downwards. Preferably, the paddle 10 is kept in the inactive position over time, for example, kept in said position by an elastic element, while it is brought to the active position only following an action by the driver.

According to the invention, the paddle 10 is positioned behind the steering wheel 500 along the main axis X-X, preferably at a distance such as to be accessible by the fingers by the driver while maintaining his grip on the steering wheel 550.

In a preferred embodiment, the gear shift device 1 comprises two paddles 10 that specularly with respect to the main axis X-X. Preferably, the two paddles 10 are angularly spaced apart by 180°. Preferably, the two paddles 10 are actuatable by the driver independently of each other. Preferably, one paddle 10 is actuatable by the driver with his left hand, while the other paddle 10 is actuated by the driver with his right hand.

In accordance with the invention, with the gearbox group in automatic mode, an action of the driver on a paddle 10 results, in addition to the change of gear, also in the change of operating mode of the gearbox group, which is configured in manual mode, for example for a certain transitory period of time.

In a further preferred embodiment, the paddle 10 has the shape of a rocker arm, extending radially in length with respect to the main axis X-X.

In a preferred embodiment, each paddle 10 comprises more than one portion actuatable independently of each other, for example, the paddle 10 includes an upper portion and a lower portion.

According to further preferred embodiment variants, in replacement of the paddles 10, a specific push-button pad is provided as part of the steering wheel group, having the same operating modes described here. Therefore, in this description and in the claims, reference is made generically to the paddle 10, without limiting it to the mere embodiment and thus including push-button embodiments.

According to the invention, the steering wheel group comprises the gear shift device 1, which comprises a control member 20 actuatable by the driver, suitable to command a plurality of operating modes of the gearbox group.

In other words, the control member 20 is actuatable by the driver in such a way as to command the gearbox group from an automatic mode to a manual mode and vice versa, without pressing the paddle 10 and thus without there being a change of gear.

According to the invention, the control member 20 comprises a touch interface device 200 located on the paddle 10, preferably in its portion accessible by the driver with his fingers.

In other words, the driver taps the touch interface device 200 with his fingertips to command the change of operating mode of the gearbox group.

Preferably, the touch interface device 200 is placed on the paddle 10 in a distal position from the driver. In other words, it is preferably positioned on the pallet 10 on the side opposite to that facing the steering wheel 550.

Preferably, the touch interface device 200 is placed on the paddle 10 in a distal position proximal to the driver. In other words, it is preferably positioned on the paddle 10 on the side facing the steering wheel 550, and is for example reachable by the driver with a thumb.

Preferably, the touch interface device 200 is placed on the paddle 10 in a lateral position from the driver. In other words, it is preferably positioned on the edge of the paddle 10.

In a preferred embodiment, the touch interface device 200 comprises a touch surface of capacitive type.

In a further preferred embodiment, the touch interface device 200 comprises a touch surface of resistive type.

Preferably, the touch interface device 200 extends on a surface such as to cover the paddle 10 in its entirety, possibly net of the edges.

In other embodiments, the touch interface device 200 extends only on a portion of the surface of the paddle 10.

According to a preferred embodiment, the touch interface device 200 is suitable to distinguish which area was tapped or pressed by the driver.

According to a preferred embodiment, the touch interface device 200 is suitable to receive a plurality of inputs to which respectively corresponds a specific command. For example, the touch interface device 200 is suitable to detect the number of taps performed on the touch surface.

Preferably, the touch interface device 200 is suitable to receive multi-touch input. For example, the touch interface device 200 is suitable to detect the number of fingers on the touch surface, or the type of movements performed by the fingertips on the touch surface.

According to a preferred embodiment, the touch interface device 200 is also suitable to detect the pressure on it and thus to detect the intensity of the action on it. For example, the touch interface device 200 is of the Force-touch type.

So, according to a preferred embodiment, using the touch interface device 200, the driver commands, based on specifically created predefined settings, for example by programming the control unit and for example by programming the touch interface device 200 itself, the transition between the automatic mode and the manual mode of the group. This is to say that the control unit is suitable to switch the gearbox group between a plurality of operating modes set by the driver who engages the touch interface 200.

According to a preferred embodiment, using the touch interface device 200, the driver commands, based on specifically created predefined settings, for example by programming the control unit and for example by programming the touch interface device 200 itself, the setting of the automatic shift mode, for example the choice of the modes according which to shift, for example setting a sport shift mode, comfort mode, economy mode' and the like.

Furthermore, depending on the force applied to the paddle 10 by the driver, and in particular of the action performed on the touch interface device 200, the control member 20 commands a shift speed that is faster, and more reactive, with respect to a pre-set shift speed or, vice versa, commands a shift speed that is slower and more comfortable.

In further other words, depending on the operating modes (i.e., the number of fingers in contact, the number of contacts, the timing of the contact, the pressure force, the touch area engaged, etc.) that the driver actuates on the touch interface device 200, a plurality of different operating modes, which are thus actively settable by driver, are foreseeable and settable, for example on the control unit.

According to a preferred embodiment, the control member 20 comprises a feedback device 250 suitable to vibrate when the touch interface device 200 is actuated, returning tactile feedback to the driver.

Preferably, the feedback device 250 is suitable to vary its modes of vibration respectively in function of the inputs received from the touch interface device 200; in other words, the modes according to which the feedback device 250 is suitable to vibrate depend on the type of order given. For example, the feedback device 250 is suitable to vibrate more intensely upon the insertion of a higher gear rather than a lower gear.

Preferably, the feedback device 250 is located in the paddle 10.

In a further preferred embodiment, the feedback device 250 is located in the steering wheel 550.

According to a preferred embodiment, the control member 20 also comprises proportional actuation means 280 connected to the paddle 10 and suitable to detect the speed of actuation on them. For example in a preferred embodiment said proportional actuation means 280 comprise at least one sensor suitable to evaluate the modes of moving the paddle 10; for example, preferably said sensor is a potentiometer.

According to a preferred embodiment, depending on the force applied to the paddle 10 by the driver, and in particular of the action detected by proportional actuation means 280, the control member 20 commands a shift speed that is faster, and more reactive, with respect to a pre-set shift speed or, vice versa, commands a shift speed that is slower and more comfortable. In other words, the position of the paddle 10 is detectable by the proportional actuation means 280.

Innovatively, the gear shift device and gearbox system are suitable to effectively solve the problems of the known art, by proposing a vehicle comprising said gear shift device that allows reducing consumption and, in particular, such as to avoid the presence of transitory time periods in which the gearbox group is in a mode not desired by the driver.

Advantageously, the gear shift device allows the driver to command the operating modes in an extremely intuitive and simple manner. In other words, advantageously, the gear shift device allows simple management of the consumption of the vehicle by the driver.

In yet other words, advantageously, the gear shift device of this invention is programmable and settable in such a way as to allow the driver to manage, through a plurality of inputs and pre-set commands, the operating modes of the gearbox group, rather than, as in the known solutions, delegating everything to an electronic management.

Advantageously, the gear shift device of this invention is suitable to allow a management of the behaviour of the vehicle and gearbox group different from the solutions of the known art in which, instead, the behaviour is pre-set by the manufacturer.

Moreover, advantageously, the gear shift device is reactive, and thus, in case of need, for example of danger, it allows the sudden change of operating mode, for example the transition between a consumption containment mode and a sport mode, for example by facilitating an overtaking operation.

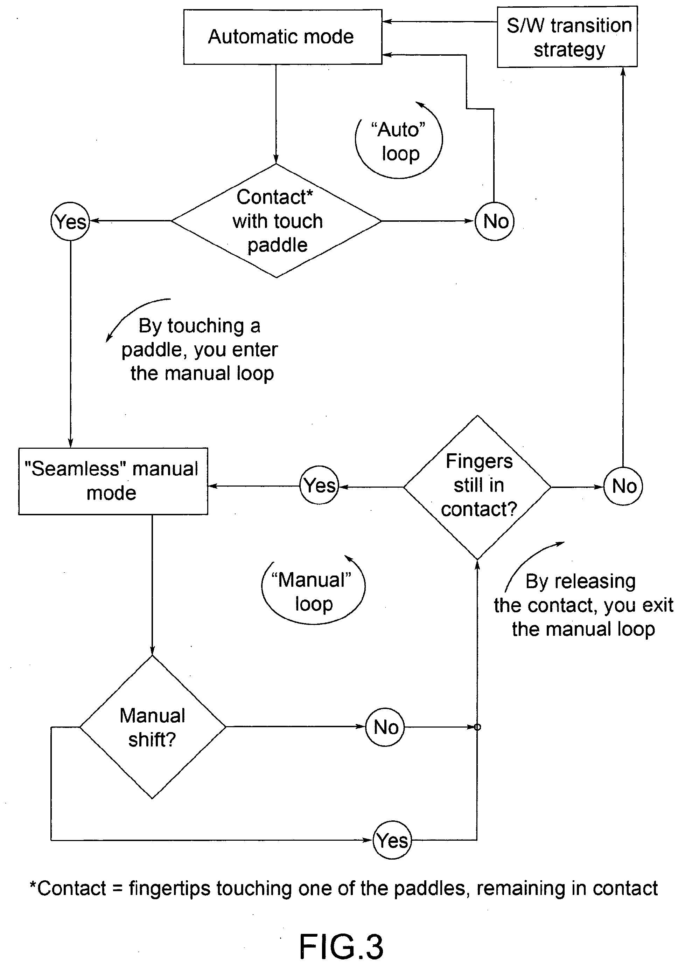

In particular, as shown, in a non-limiting way, in the block diagram in accompanying Figure 3, by means of the control member the gearbox group is advantageously configurable in a manual or automatic mode without involving a change of gear.

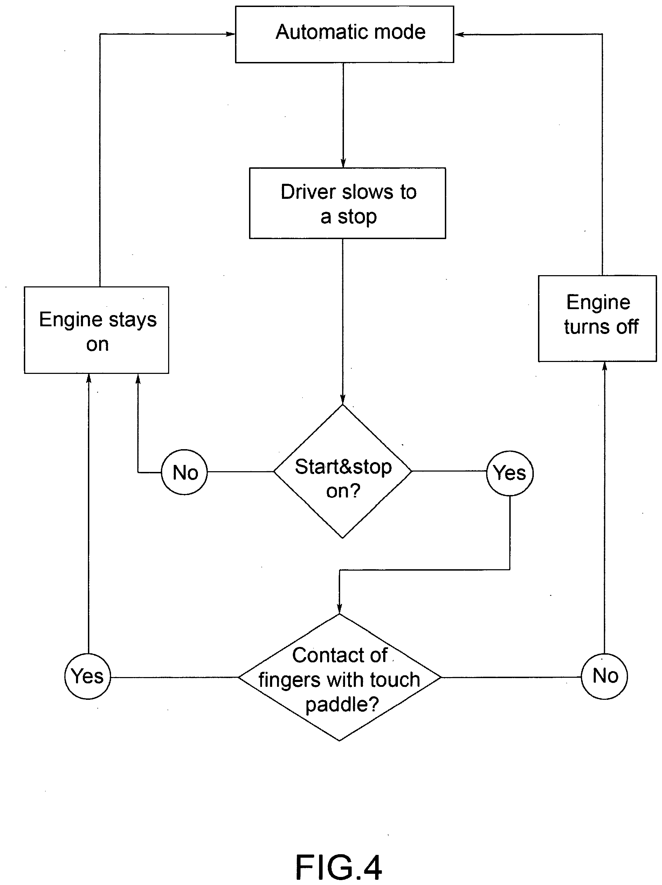

Moreover, advantageously, the gear shift device allows commanding an operating mode of the gearbox group, for example inhibiting or setting the "start&stop" mode of the gearbox group, as represented, in a non-limiting way, in the block diagram in accompanying Figure 4.

For example, advantageously, the gear shift device is settable ion one or more configurations of the gearbox group, but also of the engine group, for example by setting a cruise configuration, or again, in the case of a hybrid drive unit, allowing the management of energy recovery after receiving a specific order from the driver through the touch interface device.

Advantageously, the gear shift device allows commanding an operating mode of the gearbox group, for example, allowing the setting of a "sport shift", "economy", or "comfort" mode, or the like.

A further advantage resides in the fact that the gear shift device also detects the intensity of the driver's action on the paddle and commands the shift speed as a function of said action.

A still further advantage is linked to the fact that the driver is able to modulate the shift at will. For example, advantageously, as a function of the action on the paddle, the speed of closure or opening of the clutch is influenced and thus the speed of the shift..

Advantageously, a plurality of commands are configurable to be detected by the touch interface device, such as the number of interactions with the touch device, the duration of said interactions, the form of said interactions and the number of fingers used. Specifically, advantageously, "form of said interactions" means that a plurality of commands are configurable that exploit "multi-touch" logics, i.e., a plurality of "gesture" function commands performed by the driver on the screen, for example sliding the finger along a preferential direction, or performing a "pinch", "scroll", or similar commands on the screen.

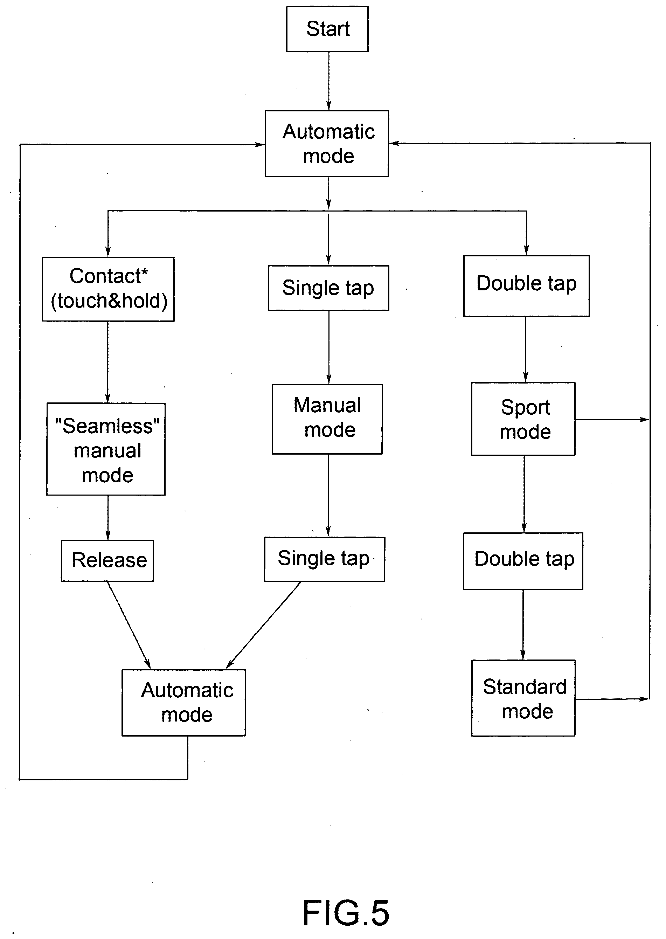

As shown, in a non-limiting way, in the block diagram of Figure 5, by means of the control member, an operating mode of the gearbox group is configurable as a function of the type of interaction with the touch surface by the driver.

Moreover, advantageously, the gear shift device is suitable to return feedback to the user, for example, vibratory, when the command is given. Advantageously said feedback varies depending on the type of command.

Advantageously, the gear shift device of this invention, in its embodiment with paddle, also gives the driver a new driving experience, for example, more comfortable or more aggressive as a function of the inputs, which, in the known art, is entirely delegated to the control unit software with which it controls the gearbox group.

For example, embodiments are envisaged in which the touch interface device 200 is operatively connected to other vehicle systems, for example to the entertainment system comprised in it. Using the touch interface device 200, the driver commands one or more functions of the vehicle; in a preferred embodiment, for example, the entertainment system is interfaced with an ICT (Information & Communication. Technology) device, such as a smartphone or tablet, and the touch interface device 200 is suitable to command a plurality of pre-set functions, such as answering or hanging up a telephone, reading a message or e-mail, or interacting with intelligent voice-command software.

Moreover, each of the variants described as belonging to a possible embodiment can be realised independently of the other variants described.

## Claims

1. A vehicle comprising:
- a steering wheel group (500) comprising a steering wheel (550) and a gear shift device (1);
- a gearbox group comprising a control unit (320), wherein the gear shift device (1) is operatively connected to the control unit to configure the gearbox group in an operating mode between a plurality of operating modes, which comprise an automatic shift mode and a manual shift mode, wherein the steering wheel group (500) identifies a main axis (X-X) of rotation of the steering wheel (550),
wherein the gear shift device (1) comprises:
- a paddle (10), positioned behind the steering wheel (550), along the main axis (X-X), pushable by the driver from an inactive position to an active position and configured to control a gear shift action of the gearbox group;
wherein the vehicle is **characterized by** the fact that the steering wheel group (500) also comprises:
- a control member (20) comprising a touch interface device (200) located on the paddle (10), wherein the touch interface device (200) commands- the control unit (320) as a function of the type of interaction with the driver to configure the gearbox group in one of the aforementioned operating modes; wherein with the gearbox group configured in automatic shift mode and the touch interface (200) actuated by the driver, the touch interface (200) commands the control unit (320) to configure the gearbox group in manual shift mode,
or
with the gearbox group configured in manual shift mode and the actuation by the driver maintained on the touch interface (200), the touch interface (200) commands the control unit (320) to maintain the gearbox group in manual shift mode.

2. Vehicle according to claim 1, wherein the touch interface device (200) is configured to receive a plurality of inputs to which respectively corresponds a specific command.

3. Vehicle according to any of the preceding claims, wherein the touch interface device (200) is also configured to detect the pressure on it, as the action executed by the driver on it.

4. Vehicle according to any of the preceding claims, wherein the touch interface device (200) is also configured to receive multi-touch input.

5. Vehicle according to any of the preceding claims, wherein the touch interface device (200) extends over a surface of the paddle (10) such as to cover the paddle (10) in its entirety.

6. Vehicle according to any of the preceding claims, wherein the control member (20) comprises a feedback device (250) configured to vibrate when the touch interface device (200) is actuated and wherein the feedback device (250) is configured to vary its modes of vibration respectively in function of the inputs received from the touch interface device (200).

7. Vehicle according to any of the preceding claims, comprising two paddles (10) that extend specularly with respect to the main axis (X-X), operable by the driver independently of each other.

8. Vehicle according to any of the preceding claims, wherein the control member (20) also comprises proportional actuation means (280) connected to the paddle (10) and configured to detect the speed of actuation on them.

9. Vehicle according to any of the previous claims, wherein, with the touch interface (200) actuated by the driver, the touch interface (200) commands the control unit (320) to inhibit the start&stop mode of the gearbox group.

10. Vehicle according to any of the previous claims, wherein, with the gearbox group in automatic shift mode, and the touch interface (200) actuated by the driver, the touch interface (200) commands the control unit (320) to configure the gearbox group in one of the plurality of operating modes, such as sport, economy, comfort or standard shift mode, as a function of a plurality of actions detected by the touch interface (200).

11. Vehicle according to any of the preceding claims, wherein, with the touch interface (200) actuated by the driver, and the paddle (10) maintained in an inactive position, the touch interface (200) commands the control unit (320) to configure the gearbox group in one of the plurality of operating modes.

## Patentansprüche

1. Fahrzeug, umfassend:
- eine Lenkradgruppe (500), die ein Lenkrad (550) und eine Gangschaltvorrichtung (1) umfasst;
- eine Getriebegruppe, die eine Steuer- bzw. Regeleinheit (320) umfasst, wobei die Gangschaltvorrichtung (1) so betriebsfähig mit der Steuer- bzw. Regeleinheit verbunden ist, dass sie die Getriebegruppe in einem Betriebsmodus zwischen einer Vielzahl von Betriebsmodi ausgestaltet, die einen automatischen Schaltmodus und einen manuellen Schaltmodus umfassen, wobei die Lenkradgruppe (500) eine Hauptdrehachse (X-X) des Lenkrads (550) definiert,
wobei die Gangschaltvorrichtung (1) umfasst:
- ein Paddle (10), das hinter dem Lenkrad (550) entlang der Hauptachse (X-X) positioniert ist, von dem Fahrer von einer inaktiven Position zu einer aktiven Position gedrückt werden kann und so ausgestaltet ist, dass es einen Gangschaltvorgang der Getriebegruppe steuert bzw. regelt;
wobei das Fahrzeug **dadurch gekennzeichnet ist, dass** die Lenkradgruppe (500) auch umfasst:
- ein Steuer- bzw. Regelelement (20), das eine berührungsempfindliche Schnittstellenvorrichtung (200) umfasst, die sich auf dem Paddle (10) befindet, wobei die berührungsempfindliche Schnittstellenvorrichtung (200) die Steuer- bzw. Regeleinheit (320) als eine Funktion des Typs der Interaktion mit dem Fahrer so befehligt, dass die Getriebegruppe in einem der vorhergehenden Betriebsmodi ausgestaltet wird; wobei, wenn die Getriebegruppe im automatischen Schaltmodus ausgestaltet ist und die berührungsempfindliche Schnittstelle (200) von dem Fahrer betätigt wird, die berührungsempfindliche Schnittstelle (200) der Steuer- bzw. Regeleinheit (320) befiehlt, die Getriebegruppe im manuellen Schaltmodus auszugestalten,
oder
wenn die Getriebegruppe im manuellen Schaltmodus ausgestaltet ist und die Betätigung von dem Fahrer auf der berührungsempfindlichen Schnittstelle (200) beibehalten wird, die berührungsempfindliche Schnittstelle (200) der Steuer- bzw. Regeleinheit (320) befiehlt, die Getriebegruppe im manuellen Schaltmodus zu halten.

2. Fahrzeug nach Anspruch 1, wobei die berührungsempfindliche Schnittstellenvorrichtung (200) so ausgestaltet ist, dass sie eine Vielzahl von Eingaben empfängt, denen jeweils ein spezifischer Befehl entspricht.

3. Fahrzeug nach einem der vorhergehenden Ansprüche, wobei die berührungsempfindliche Schnittstellenvorrichtung (200) auch so ausgestaltet ist, dass sie den Druck auf ihr als den von dem Fahrer auf ihr ausgeführten Vorgang feststellt.

4. Fahrzeug nach einem der vorhergehenden Ansprüche, wobei die berührungsempfindliche Schnittstellenvorrichtung (200) auch so ausgestaltet ist, dass sie Eingaben mit Mehrfachberührungen empfängt.

5. Fahrzeug nach einem der vorhergehenden Ansprüche, wobei die berührungsempfindliche Schnittstellenvorrichtung (200) sich derart über eine Oberfläche des Paddles (10) erstreckt, dass sie das Paddle (10) in seiner Gesamtheit bedeckt.

6. Fahrzeug nach einem der vorhergehenden Ansprüche, wobei das Steuer- bzw. Regelelement (20) eine Rückmeldungsvorrichtung (250) umfasst, die so ausgestaltet ist, dass sie vibriert, wenn die berührungsempfindliche Schnittstellenvorrichtung (200) betätigt wird, und wobei die Rückkopplungsvorrichtung (250) so ausgestaltet ist, dass sie ihre Vibrationsmodi jeweils in Abhängigkeit der von der berührungsempfindlichen Schnittstellenvorrichtung (200) empfangenen Eingaben variiert.

7. Fahrzeug nach einem der vorhergehenden Ansprüche, das zwei Paddles (10) umfasst, die sich in Bezug auf die Hauptachse (X-X) spiegelnd erstrecken und vom Fahrer unabhängig voneinander betätigt werden können.

8. Fahrzeug nach einem der vorhergehenden Ansprüche, wobei das Steuer- bzw. Regelelement (20) auch proportionale Betätigungsmittel (280) umfasst, die mit dem Paddle (10) verbunden sind und so ausgestaltet sind, dass sie die Geschwindigkeit der Betätigung auf ihnen feststellen.

9. Fahrzeug nach einem der vorhergehenden Ansprüche, wobei, wenn die berührungsempfindliche Schnittstelle (200) von dem Fahrer betätigt wird, die berührungsempfindliche Schnittstelle (200) der Steuer- bzw. Regeleinheit (320) befiehlt, den Start- & Stoppmodus der Getriebegruppe zu sperren.

10. Fahrzeug nach einem der vorhergehenden Ansprüche, wobei, wenn die Getriebegruppe sich im automatischen Schaltmodus befindet und die berührungsempfindliche Schnittstelle (200) von dem Fahrer betätigt wird, die berührungsempfindliche Schnittstelle (200) der Steuer- bzw. Regeleinheit (320) befiehlt, die Getriebegruppe in Abhängigkeit einer Vielzahl von durch die berührungsempfindliche Schnittstelle (200) festgestellten Vorgängen in einem der Vielzahl von Betriebsmodi, wie beispielsweise Sport-, Spar-, Komfort- oder Standard-Schaltmodus, auszugestalten.

11. Fahrzeug nach einem der vorhergehenden Ansprüche, wobei, wenn die berührungsempfindliche Schnittstelle (200) von dem Fahrer betätigt wird und das Paddle (10) in einer inaktiven Position gehalten wird, die berührungsempfindliche Schnittstelle (200) der Steuer- bzw. Regeleinheit (320) befiehlt, die Getriebegruppe in einem der Vielzahl von Betriebsmodi auszugestalten.

## Revendications

1. Véhicule comprenant :
- un ensemble volant de direction (500) comprenant un volant de direction (550) et un dispositif de changement de vitesse (1) ;
- un ensemble boîte de vitesses comprenant une unité de régulation (320), dans lequel le dispositif de changement de vitesse (1) est relié fonctionnellement à l'unité de régulation pour configurer l'ensemble boîte de vitesses en un mode de fonctionnement entre une pluralité de modes de fonctionnement, qui comprennent un mode de changement automatique et un mode de changement manuel, dans lequel l'ensemble volant de direction (500) identifie un axe principal (X-X) de rotation du volant de direction (550),
dans lequel le dispositif de changement de vitesse (1) comprend :
- une manette (10), positionnée derrière le volant de direction (550), le long de l'axe principal (X-X), pouvant être poussée par le conducteur d'une position inactive à une position active et configurée pour réguler une action de changement de vitesse de l'ensemble boîte de vitesses ;
dans lequel le véhicule est **caractérisé par le fait que** l'ensemble volant de direction (500) comprend également :
- un élément de régulation (20) comprenant un dispositif d'interface tactile (200) situé sur la manette (10), dans lequel le dispositif d'interface tactile (200) commande l'unité de régulation (320) en fonction du type d'interaction avec le conducteur pour configurer l'ensemble boîte de vitesses en l'un des modes de fonctionnement susmentionnés ; dans lequel avec l'ensemble boîte de vitesses configuré en mode de changement automatique et l'interface tactile (200) actionnée par le conducteur, l'interface tactile (200) commande l'unité de régulation (320) pour configurer l'ensemble boîte de vitesses en mode de changement manuel,
ou
avec l'ensemble boîte de vitesses configuré en mode de changement manuel et l'activation par le conducteur maintenue sur l'interface tactile (200), l'interface tactile (200) commande l'unité de régulation (320) pour maintenir l'ensemble boîte de vitesses en mode de changement manuel.

2. Véhicule selon la revendication 1, dans lequel le dispositif d'interface tactile (200) est configuré pour recevoir une pluralité d'entrées auxquelles correspond respectivement une commande spécifique.

3. Véhicule selon l'une quelconque des revendications précédentes, dans lequel le dispositif d'interface tactile (200) est également configuré pour détecter la pression sur lui, comme l'action exécutée par le conducteur sur lui.

4. Véhicule selon l'une quelconque des revendications précédentes, dans lequel le dispositif d'interface tactile (200) est également configuré pour recevoir une entrée tactile multipoint.

5. Véhicule selon l'une quelconque des revendications précédentes, dans lequel le dispositif d'interface tactile (200) s'étend au-dessus d'une surface de la manette (10) de façon à couvrir la manette (10) dans sa totalité.

6. Véhicule selon l'une quelconque des revendications précédentes, dans lequel l'élément de régulation (20) comprend un dispositif de retour (250) configuré pour vibrer lorsque le dispositif d'interface tactile (200) est actionné et dans lequel le dispositif de retour (250) est configuré pour faire varier ses modes de vibration respectivement en fonction des entrées reçues à partir du dispositif d'interface tactile (200).

7. Véhicule selon l'une quelconque des revendications précédentes, comprenant deux manettes (10) qui s'étendent de manière spéculaire par rapport à l'axe principal (X-X), pouvant être utilisées par le conducteur indépendamment l'une de l'autre.

8. Véhicule selon l'une quelconque des revendications précédentes, dans lequel l'élément de régulation (20) comprend également des moyens d'actionnement proportionnel (280) reliés à la manette (10) et configurés pour détecter leur vitesse d'actionnement.

9. Véhicule selon l'une quelconque des revendications précédentes, dans lequel, avec l'interface tactile (200) actionnée par le conducteur, l'interface tactile (200) commande l'unité de régulation (320) pour empêcher le mode de marche et arrêt de l'ensemble boîte de vitesses.

10. Véhicule selon l'une quelconque des revendications précédentes, dans lequel, avec l'ensemble boîte de vitesses en mode de changement automatique et l'interface tactile (200) actionnée par le conducteur, l'interface tactile (200) commande l'unité de régulation (320) pour configurer l'ensemble boîte de vitesses en l'un de la pluralité de modes de fonctionnement, tel qu'un mode de changement sport, économie, confort ou standard, en fonction d'une pluralité d'actions détectées par l'interface tactile (200).

11. Véhicule selon l'une quelconque des revendications précédentes, dans lequel, avec l'interface tactile (200) actionnée par le conducteur et la manette (10) maintenue dans une position inactive, l'interface tactile (200) commande l'unité de régulation (320) pour configurer l'ensemble boîte de vitesses en l'un de la pluralité de modes de fonctionnement.
